# EUROPÄISCHE PATENTSCHRIFT

(11) **EP 0 768 208 B1**
(45) Veröffentlichungstag und Bekanntmachung des Hinweises auf die Patenterteilung: **07.03.2001**
(21) Anmeldenummer: 96115334.3
(22) Anmeldetag: 25.09.1996
(51) Int. Cl.: B60Q 1/30, B60Q 1/32

(54) **Nachtfahrsicherungssystem**
Security device for night traffic
Dispositif de sécurité pour circulation de nuit

(30) Priorität: 12.10.1995 DE 29516809 U
(43) Veröffentlichungstag der Anmeldung: 16.04.1997
(73) Patentinhaber: SPANSET INTER AG, CH-8618 Oetwil am See (CH)
(72) Erfinder: Dänekas, Rolf, D-52525 Waldfeucht (DE); Panhausen, Willi, D-52538 Gangelt (DE)
(74) Vertreter: Tergau, Enno, Dipl.-Ing.

(56) Entgegenhaltungen:
- US-A- 4 903 174
- US-A- 5 157 591
- US-A- 5 438 490

## Beschreibung

Die vorliegende Erfindung betrifft ein Nachtfahrtsicherungssystem mit den Merkmalen des Oberbegriffs des Anspruchs 1. Für den Transport langer, üblicherweise stangenförmiger Teile ist es üblich, Transportfahrzeuge einzusetzen, welche aus einer das Fahrzeug antreibenden Zugmaschine und einem mit der Zugmaschine nicht verbundenen Nachläufer bestehen. Die eigentliche Verbindung zwischen Zugmaschine und Nachläufer bildet das lange, stangenförmige Ladegut selbst. Das Ladegut ist hierbei vorzugsweise in gabelartigen Haltevorrichtungen , welche sowohl auf der Zugmaschine als auch auf dem Nachläufer angeordnet sind, fest verzurrt. Infolge der festen Verzurrung sind sowohl die Zugmaschine als auch der Nachläufer mit dem Ladegut so fest verbunden, daß die Zugmaschine mittelbar über das Ladegut den Nachläufer mit sich zieht. Derartige Transportfahrzeuge sind aus EP-A-0 312 815 und aus DE-U-8 702 917 bekannt.

Aus Sicherheitsgründen müssen die infolge der sehr langen Ladung auch sehr langen Transportzüge insbesondere für Nachtfahrten deutlich sichtbar sein. Die Front- und Heckseite sind durch die fahrzeugeigenen Scheinwerfer bzw. die Frontscheinwerfer an der Zugmaschine und die Heckscheinwerfer an der Zugmaschine und am Nachläufer gut erkennbar. Problematisch ist die Erkennbarkeit der beiden Fahrzeugseiten. Zur Lösung dieser Problematik ist es bekannt, am Ladegut in vorgegebenen Abständen einzelne optische Signaleinheiten, z.B. Reflektoren zu befestigen. Insbesondere beim Transport von Baumstämmen ist es bekannt, die Reflektoren einfach an die einzelnen Baumstämme zu nageln. Bei längeren Beton-(Fertig)Teilen ist es bekannt, die Reflektoren an den Teilen zu verschrauben oder sie aufzukleben.

Diese Art der Anbringung der Reflektorelemente hat einerseits den Nachteil, daß die Reflektorelemente bei jedem Beladevorgang erneut angebracht werden müssen und nach jedem Entladevorgang ensprechend abmontiert werden müssen. Dies ist sehr zeit- und kostenintensiv. Andererseits hat die Befestigung an der Ladung den Nachteil, daß sie infolge des oftmals bestehenden Zeitdrucks nur sehr nachlässig erfolgt. Dies hat wiederum zur Folge, daß während des Transports häufig einzelne Reflektoren verlorengehen. Neben dem hierdurch entstehenen Materialverlust ist vor allem nachteilig, daß die verlorenen Reflektoren nicht mehr zur Absicherung des Fahrzeugs wirksam sind.

Ausgehend von diesen Nachteilen liegt der Erfindung die Aufgabe zugrunde, ein Nachtfahrtsicherungssystem so zu gestalten, daß es schnell und sicher verfügbar ist. Diese Aufgabe ist durch die Merkmalskombination des Anspruches 1 gelöst.

Die Erfindung macht es sich zunutze, daß die die elektrischen Verbraucher am Nachläufer versorgenden Versorgungsleitungen oder Signalleitungen, welche von der Zugmaschine zum Nachläufer führen, üblicherweise in einem Schutzschlauch angeordnet sind. Der Schutzschlauch ummantelt die Versorgungsleitungen und schützt sie gegen äußere Einflüsse und Beschädigungen. Gemäß der Erfindung sind die optischen Signaleinheiten auf dem Außenmantel des Schutzschlauchs befestigt. Da sich der Schutzschlauch nahezu über die gesamte seitliche Länge des Transportfahrzeugs erstreckt, ist es möglich, auch die gesamte Länge des Schutzschlauchs als wirksame Länge für die Signaleinheiten auszunutzen.

Hauptvorteil der Erfindung ist, daß die Signalelemente permanent am Schutzschlauch und damit auch permanent am Transportfahrzeug befestigt sind. Es entfällt also die nach dem Stand der Technik stets erforderliche Montage und Demontage der Signaleinheiten. Ein weiterer Vorteil besteht darin, daß die Signaleinheiten mit dem Schutzschlauch sicher und fest verbunden sind, so daß ein Abfallen bzw. Verlieren der Signaleinheiten während der Fahrt nahezu ausgeschlossen ist.

Materialsparend und den Sicherheitsanforderungen genügend ist die Ausgestaltung der Erfindung nach Anspruch 2, bei welcher zwei auf der Schutzhülle diametral gegenüberliegende Signaleinheiten vorgesehen sind.

Es ist sowohl möglich, die Reflektoreinheiten über die Länge und den Umfang des Schutzschlauches statistisch verteilt anzuordnen, als auch die Signaleinheiten gemäß Anspruch 3 technisch einfach und kostengünstig als Signalstreifen auszugestalten.

Sicherheitstechnisch vorteilhaft ist es gemäß Anspruch 4, sich über die gesamte Länge der Schutzschläuche erstreckende Signalstreifen zu verwenden.

Die Ansprüche 5 bis 7 geben schließlich verschiedene Varianten der Befestigung der Signalstreifen auf dem Schutzschlauch an.

In einer bevorzugten Ausführungsform ist optische Signaleinheit als aktive Beleuchtungseinrichtung ausgestaltet (Anspruch 8). Als aktive Signaleinheit sind insbesondere elektrisch leuchtende Leiter oder Leuchtelemente auf der Basis elektrischer Lumineszenz technisch einfach einsetzbar, da diese Signaleinheiten ihre notwendige elektrische Energie von dem ohnehin vorhandenen Bordnetz des Transportfahrzeuges erhalten können. Zusätzliche Energiequellen sind überflüssig, so daß die aktive Signaleinheit montagetechnisch und sicherheitstechnisch unaufwendig realisierbar ist. Die aktive Signaleinheit ist z. B. als Folienband ausgestaltet und kann in diesem Fall besonders platzsparend an dem Schutzschlauch befestigt werden. Außerdem ist die aktive Signaleinheit als Folienband aufgrund der streifenartigen und flachen Geometrie gegen Beschädigungen gut geschützt. Weiterhin ist die aktive Signaleinheit unabhängig von einer Fremdbeleuchtung, z. B. ein auf das Transportfahrzeug zufahrendes Fremdfahrzeug, wirksam.

Die Ansprüche 9 und 10 schlagen Signaleinheiten vor, welche aufgrund ihrer passiven Wirkungsweise technisch einfach und kostengünstig herstellbar sind. Derartige passive Signaleinheiten sind vorzugsweise als phosphoreszierende oder reflektierende Lacke bzw. Pasten ausgebildet. Diese Lacke bzw. Pasten sind als einfache Zukaufteile auf dem Markt erhältlich. Sie können vollflächig oder materialsparend partiell, insbesondere als Signalstreifen, auf den Schutzmantel aufgetragen werden.

Eine besonders hohe Langlebigkeit der Signaleinheit bei gleichzeitig kostengünstiger Herstellung ergibt sich, wenn die Signaleinheit gemäß den Ansprüchen 11 und 12 aus Garnen, Chemiefasern, monofilen Fäden oder dergl. besteht, welche entweder erhaben in den Schutzmantel eingewebt sind oder in einen gewebten Schutzschlauch mit eingewebt sind. Diese Garne und Chemiefasern sind entweder nachleuchtend (phosporeszierend) oder reflektierend ausgestaltet. Die Erhabenheit der eingewebten Signaleinheit hat den zusätzlichen Vorteil, daß die aufgrund von nicht zu vermeidenden Verschmutzungen im Anwendungsbetrieb nachlassende optische Erkennbarkeit der Signaleinheit durch einfaches Abreiben der erhaben überstehenden Gewebebestandteile wieder aufgefrischt wird.

Kostengünstig ist die Ausgestaltung der Signalstreifen als einfaches Zukaufteil gemäß Anspruch 13. Hierbei werden handelsübliche Reflektorbänder einfach zugekauft und auf dem Schutzschlauch befestigt.

Anhand der Zeichnungsfiguren ist die Erfindung mit weiteren Vorteilen und Merkmalen näher beschrieben. Es zeigen:
- Fig.1: eine Seitenansicht des aus Zugmaschine und Nachläufer bestehenden Transportfahrzeugs und

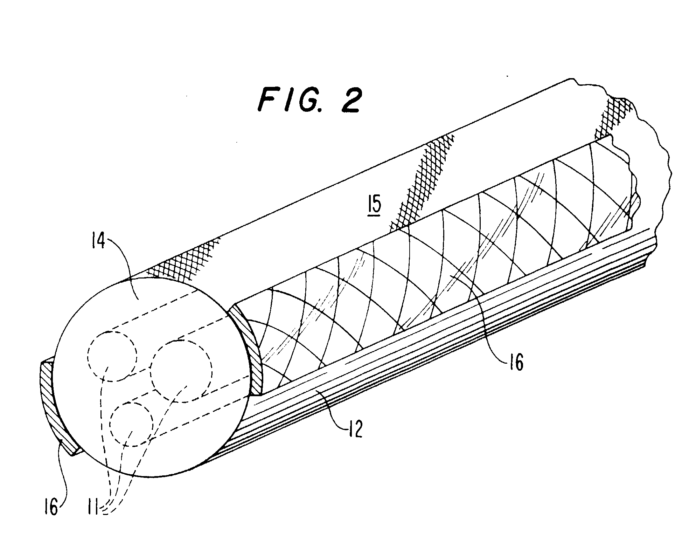

- Fig. 2: eine perspektivische Darstellung eines Schutzschlauchabschnitts mit einliegenden Versorgungsleitungen und am Schutzschlauch adaptierten, reflektierenden Signalstreifen.

In Fahrzeuglängsrichtung 1 erstreckt sich das stangenförmige Ladegut 2. Das Ladegut 2 ist in gabelförmigen Haltevorrichtungen 3 sowohl auf der Zugmaschine 4 als auch auf dem Nachläufer 5 niedergezurrt und fixiert. Die Zugmaschine 4 besteht im wesentlichen aus dem Führerhaus 6, dem Lastkran 7 und der Aufliegerfläche 8. Auf der Aufliegerfläche 8 der Zugmaschine 4 ist die gabelförmige Haltevorrichtung 3 angeordnet.

Auf der Ladefläche 9 des Nachläufers 5 ist die gabelförmige Haltevorrichtung 3 des Nachläufers 5 angeordnet. An einem zwischen Zugmaschine 4 und Nachläufer 5 gespannten Stahlseil 10 ist zur Ermöglichung einer Längenänderung wellenförmig der die Versorgungsleitungen 11 aufnehmende und schützend ummantelnde Schutzschlauch 2 mittelbar von Halteelementen 13 gehalten.

Der Schutzschlauch 12 nimmt die Versorgungsleitungen 11 in seiner Innenkammer 14 auf. Auf dem Außenmantel 15 des Schutzschlauchs 12 sind zwei einander diametral gegenüberliegende, als reflektierende Signalstreifen bzw. Reflektorstreifen ausgebildete passive Signaleinheiten 16 befestigt.

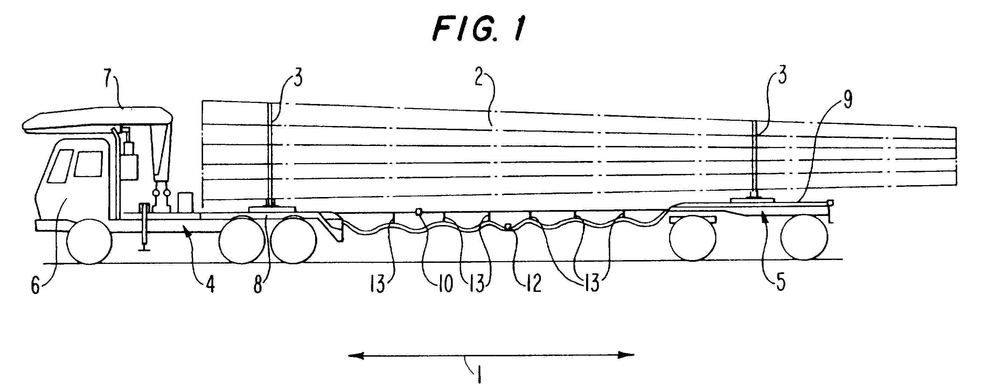

Fährt in der Nacht oder bei Dämmerung ein Fahrzeug mit eingeschaltetem Licht auf eine der Seiten des in Fig. 1 dargestellten Transportfahrzeugs zu, wird mindestens eine der beiden reflektierenden Signaleinheiten 16 vom Scheinwerferlicht erfaßt und reflektiert das Scheinwerferlicht. Infolge der Reflexion erkennt der Fahrer des Fremdfahrzeugs, daß er ein überlanges Transportfahrzeug vor sich hat und kann gegebenenfalls abbremsen bzw. anderweitig reagieren.

### Bezugszeichenliste

- 1: Fahrzeuglängsrichtung
- 2: Ladegut
- 3: Haltevorrichtung
- 4: Zugmaschine
- 5: Nachläufer
- 6: Führerhaus
- 7: Lastkran
- 8: Aufliegerfläche
- 9: Ladefläche
- 10: Stahlseil
- 11: Versorgungsleitung
- 12: Schutzschlauch
- 13: Haltelement
- 14: Innenkammer
- 15: Außenmantel
- 16: passive Signaleinheit

## Patentansprüche

1. Nachtfahrtsicherungssystem für aus Zugmaschine (4) und Nachläufer (5) bestehende Transportfahrzeuge im wesentlichen gebildet aus mindestens einer optischen Signaleinheit (16),
dadurch gekennzeichnet,
daß die Signaleinheit (16) bzw. die Signaleinheiten (16) auf dem Außenmantel (15) eines die Versorgungsleitungen (11) zwischen Zugmaschine (4) und Nachläufer (5) ummantelnden Schutzschlauchs (12) befestigt sind.

2. System nach Anspruch 1,
gekennzeichnet durch
zwei auf dem Außenmantel (15) des Schutzschlauchs (12) einander diametral gegenüberliegend angeordnete Signaleinheiten (16) zur Sicherung jeweils einer Fahrzeugseite.

3. System nach Anspruch 1 oder 2,
gekennzeichnet durch
einen Signalstreifen als Signaleinheit (16).

4. System nach Anspruch 3,
dadurch gekennzeichnet,
daß die Signaleinheit (16) als durchgängiger, sich im wesentlichen über die gesamte Länge des Schutzschlauchs (12) erstreckender Signalstreifen ausgebildet ist.

5. System nach Anspruch 3 oder 4,
dadurch gekennzeichnet,
daß der Signalstreifen auf dem Außenmantel (15) des Schutzschlauchs (12) aufgenäht ist.

6. System nach Anspruch 3 oder 4,
dadurch gekennzeichnet,
daß der Signalstreifen auf dem Außenmantel (15) des Schutzschlauchs (12) aufgeklebt ist.

7. System nach Anspruch 3 oder 4,
dadurch gekennzeichnet,
daß der Signalstreifen auf dem Außenmantel (15) des Schutzschlauchs (12) aufgeschweißt ist.

8. System nach einem oder mehreren der vorhergehenden Ansprüche,
gekennzeichnet durch
eine mit einer elektrischen Energiequelle, z.B. dem Bordnetz des Transportfahrzeugs verbundene aktive Signaleinheit.

9. System nach einem der Ansprüche 1 bis 7,
gekennzeichnet durch
eine phosphoreszierende passive Signaleinheit.

10. System nach einem der Ansprüche 1 bis 7,
gekennzeichnet durch
eine reflektierende passive Signaleinheit (16).

11. System nach Anspruch 9 oder 10,
dadurch gekennzeichnet,
daß die passive Signaleinheit (16), insbesondere als Signalstreifen, erhaben über den Außenmantel (15) des Schutzschlauchs (12) hinausstehend in den Schutzmantel (12) eingewebt ist.

12. System nach Anspruch 9 oder 10,
dadurch gekennzeichnet,
daß die passive Signaleinheit (16), insbesondere als Signalstreifen, in einen gewebten Schutzschlauch (12) mit eingewebt ist.

13. System nach Anspruch 10,
gekennzeichnet durch
ein handelsübliches Reflektorband als Signalstreifen.

## Claims

1. Night-driving safety system for transport vehicles comprising a tractor (4) and a trailer (5), which system is essentially formed from at least one optical signalling unit (16), characterized in that the signalling unit (16) or the signalling units (16) is/are fastened on the outer lateral surface (15) of a protecting sleeve (12) covering the supply lines (11) between the tractor (4) and the trailer (5).

2. System according to Claim 1, characterized by two signalling units (16), arranged on the outer lateral surface (15) of the protecting sleeve (12) diametrically opposite one another, for the purpose of safeguarding one side of the vehicle each.

3. System according to Claim 1 or 2, characterized by a signalling strip as signalling unit (16).

4. System according to Claim 3, characterized in that the signalling unit (16) is designed as a continuous signalling strip extending essentially over the entire length of the protecting sleeve (12).

5. System according to Claim 3 or 4, characterized in that the signalling strip is sewn onto the outer lateral surface (15) of the protecting sleeve (12).

6. System according to Claim 3 or 4, characterized in that the signalling strip is adhesively bonded on the outer lateral surface (15) of the protecting sleeve (12).

7. System according to Claim 3 or 4, characterized in that the signalling strip is welded on the outer lateral surface (15) of the protecting sleeve (12).

8. System according to one or more of the preceding claims, characterized by an active signalling unit connected to an electric power source, for example the electrical system of the transport vehicle.

9. System according to one of Claims 1 to 7, characterized by a phosphorescent passive signalling unit.

10. System according to one of Claims 1 to 7, characterized by a reflecting passive signalling unit (16).

11. System according to Claim 9 or 10, characterized in that the passive signalling unit (16), in particular as a signalling strip, is woven into the protecting sleeve (12) so as to project in a raised fashion over the outer lateral surface (15) of the protecting sleeve (12).

12. System according to Claim 9 or 10, characterized in that the passive signalling unit (16), in particular as a signalling strip, is woven into a likewise woven protecting sleeve (12).

13. System according to Claim 10, characterized by a commercially available reflecting tape as a signalling strip.

## Revendications

1. Dispositif de sécurité pour circulation nocturne destiné à des véhicules de transport constitués d'un tracteur (4) et d'une remorque (5), le dispositif étant essentiellement constitué par au moins une unité de signalisation optique (16)
caractérisé en ce que l'unité de signalisation (16) ou respectivement les unités de signalisation (16) sont fixées sur l'enveloppe extérieure (15) d'un tuyau protecteur (12) qui entoure les lignes et conduites d'alimentation (11) entre le tracteur (4) et la remorque (5).

2. Dispositif selon la revendication 1,
caractérisé par deux unités de signalisation (16) agencées diamétralement opposées l'une par rapport à l'autre sur l'enveloppe extérieure (15) du tuyau protecteur (12) pour assurer la sécurité d'un côté respectif du véhicule.

3. Dispositif selon l'une ou l'autre des revendications 1 et 2,
caractérisé par une bande de signalisation à titre d'unité de signalisation (16).

4. Dispositif selon la revendication 3,
caractérisé en ce que l'unité de signalisation (16) est formée par des bandes de signalisation continues qui s'étendent sensiblement sur la totalité de la longueur du tuyau protecteur (12).

5. Dispositif selon l'une ou l'autre des revendications 3 et 4,
caractérisé en ce que la bande de signalisation est cousue sur l'enveloppe extérieure (15) du tuyau protecteur (12).

6. Dispositif selon l'une ou l'autre des revendications 3 et 4,
caractérisé en ce que la bande de signalisation est collée sur l'enveloppe extérieure (15) du tuyau protecteur (12).

7. Dispositif selon l'une ou l'autre des revendications 3 et 4,
caractérisé en ce que la bande de signalisation est soudée sur l'enveloppe extérieure (15) du tuyau protecteur (12).

8. Dispositif selon l'une ou plusieurs des revendications précédentes,
caractérisé par une unité de signalisation active reliée à une source d'énergie électrique, par exemple le réseau de bord du véhicule de transport.

9. Dispositif selon l'une des revendications 1 à 7,
caractérisé par une unité de signalisation passive phosphorescente.

10. Dispositif selon l'une des revendications 1 à 7,
caractérisé par une unité de signalisation passive (16) réfléchissante.

11. Dispositif selon l'une ou l'autre des revendications 9 et 10,
caractérisé en ce que l'unité de signalisation passive (16), en particulier sous la forme d'une bande de signalisation, est tissée dans l'enveloppe protectrice (12) en surélévation au-delà de l'enveloppe extérieure (15) du tuyau protecteur (12).

12. Dispositif selon l'une ou l'autre des revendications 9 et 10,
caractérisé en ce que l'unité de signalisation passive (16), en particulier sous forme de bande de signalisation, est tissée conjointement dans un tuyau protecteur tissé (12).

13. Dispositif selon la revendication 10,
caractérisé par une bande réflectrice du commerce à titre de bande de signalisation.
